# FASCICULE DE BREVET EUROPEEN

(11) **EP 2 883 761 B1**
(45) Date de publication et mention de la délivrance du brevet: **16.03.2022**
(21) Numéro de dépôt: 14195320.8
(22) Date de dépôt: 28.11.2014
(51) Int. Cl.: B60S 1/34

(54) **Agrafe de fixation d'un tuyau de circulation de fluide à un bras d'entraînement d'un balai d'essuie-glace de véhicule**
Befestigungsklammer eines Flüssigkeitskreislaufschlauchs an einem Antriebsarm eines Scheibenwischerblattes eines Fahrzeugs
Clip for attaching a fluid circulation pipe to a drive arm of a vehicle windscreen wiper

(30) Priorité: 10.12.2013 FR 1362353
(43) Date de publication de la demande: 17.06.2015
(73) Titulaire: Valeo Systèmes d'Essuyage, 78322 Le Mesnil Saint Denis (FR)
(72) Inventeur: Picot, Philippe, 63000 Les Pradeaux (FR); Rollet, Sébastien, 63260 Aigueperse (FR)
(74) Mandataire: Valeo Visibility

(56) Documents cités:
- EP-A1- 2 591 958
- FR-A5- 2 163 062
- FR-A6- 2 119 456
- JP-A- 2006 007 971
- US-A- 5 430 909
- US-A1- 2013 119 208

## Description

### DOMAINE TECHNIQUE

La présente invention concerne une agrafe de fixation d'un tuyau de circulation de fluide à un bras d'entraînement d'un balai d'essuie-glace de véhicule, en particulier automobile, ainsi qu'un bras d'entraînement d'un balai d'essuie-glace portant au moins une telle agrafe.

### ETAT DE L'ART

Un balai d'essuie-glace comprend en général un corps longitudinal portant une lame d'essuyage, en général en caoutchouc, destinée à frotter contre le pare-brise d'un véhicule pour évacuer de l'eau en l'amenant en dehors du champ de vision du conducteur. Le balai est porté par un bras qui est entraîné par un moteur dans un mouvement de va-et-vient angulaire. Les moyens de liaison du balai au bras comprennent en général un connecteur qui est solidaire du corps du balai et un adaptateur qui est articulé sur le connecteur et fixé à une extrémité du bras, dont l'extrémité opposée est articulée sur le véhicule et accouplée au moteur.

Il est connu d'équiper un balai d'essuie-glace avec des moyens de projection de fluide, tel qu'un liquide lave-glace. Le liquide lave-glace est contenu dans un réservoir situé sous le capot du véhicule et est amené jusqu'au balai par au moins un tuyau souple qui s'étend en partie le long du bras. Le tuyau ne doit pas venir au contact du pare-brise lors des déplacements du balai. De plus, il est préférable que le tuyau ne soit pas visible par les occupants du véhicule pour une raison esthétique. Une solution connue consiste à fixer le tuyau au bras au moyen d'une agrafe qui comprend des moyens de retenue du tuyau et des moyens de fixation au bras, en général par encliquetage élastique.

Cependant, les agrafes de la technique antérieure ne sont pas entièrement satisfaisantes car elles sont relativement volumineuses et leur méthode de montage n'est pas simple et peut nécessiter l'utilisation d'outil spécifique. Il peut par exemple s'avérer difficile de monter manuellement une agrafe par encliquetage élastique dans deux orifices distincts d'un bras d'entraînement.

Le document US5430909A décrit le préambule de la revendication 1.

L'invention propose une solution simple, efficace et économique à au moins une partie des problèmes de la technique antérieure.

### EXPOSE DE L'INVENTION

L'invention propose un bras d'entraînement d'un balai d'essuie-glace de véhicule, en particulier automobile comprenant au moins une agrafe de fixation d'un tuyau de circulation de fluide au bras d'entraînement, ladite agrafe comprenant des moyens de retenue du tuyau et des moyens de fixation au bras, lesdits moyens de fixation sont situés sur un côté de l'agrafe opposé à celui où sont situés lesdits moyens de retenue, l'agrafe comprenant en outre des moyens d'anti-rotation de l'agrafe, qui sont configurés pour coopérer par butée avec le bras d'entraînement, le bras d'entraînement est caractérisé en ce que les moyens de fixation de l'au moins une agrafe comprennent des moyens d'encliquetage élastique qui sont engagés et traversent un orifice du bras et en ce que les moyens d'anti-rotation comprennent au moins un doigt comportant une surface d'appui.

L'agrafe est ainsi configurée pour faciliter son montage sur le bras. Les moyens de fixation et les moyens de retenue sont situés sur des côtés opposés de l'agrafe (tels que les côtés supérieur et inférieur, respectivement), ce qui permet de ne pas être gêné par les moyens de fixation lorsque l'on manipule les moyens de retenue, et inversement, de ne pas être gêné par les moyens de retenue lorsque l'on manipule les moyens de fixation. Il est par exemple envisageable de monter (et démonter) un tuyau dans les moyens de retenue de l'agrafe, sans intervenir sur ses moyens de fixation. Il est également envisageable de monter (et démonter) l'agrafe du bras sans intervenir sur les moyens de retenue qui peuvent toujours coopérer avec un tuyau.

Par ailleurs, selon l'invention, les moyens de fixation sont d'un type particulier car ils comprennent des moyens d'encliquetage élastique qui sont configurés pour être engagés dans un orifice du bras, et traverser cet orifice. Autrement dit, les moyens de fixation de l'agrafe sont destinés à traverser un orifice traversant du bras. Dans la présente demande, on entend par orifice traversant, un orifice qui traverse de part en part l'épaisseur de matière d'une pièce. Autrement dit, les deux extrémités d'un orifice traversant sont débouchantes au contraire d'un trou borgne qui comprend une seule extrémité traversante ou même d'une cavité qui n'a en général qu'une seule ouverture.

Par ailleurs, du fait que les moyens d'encliquetage de l'agrafe coopèrent avec un orifice du bras, un seul orifice peut suffire à l'accrochage de l'agrafe au balai.

De préférence, les moyens de fixation comprennent au moins une patte élastiquement déformable et comportant à une extrémité au moins une dent d'accrochage.

Les moyens de fixation peuvent comprendre au moins deux pattes élastiquement déformables et comportant respectivement au moins deux dents d'accrochage qui sont orientées dans des directions sensiblement opposées. Avantageusement, la ou les pattes coopèrent par butée avec le bord périphérique de l'orifice pour limiter les déplacements de l'agrafe.

De préférence, lesdites au moins deux pattes s'étendent respectivement dans deux plans parallèles entre eux et espacés l'un de l'autre.

Lesdits moyens de retenue peuvent comprendre un organe longitudinal tubulaire définissant un espace longitudinal interne de logement et de retenue du tuyau. Cet organe comporte de préférence une fente longitudinale traversante configurée pour autoriser le passage du tuyau lors de son montage dans ledit espace, de préférence par encliquetage élastique. La fente débouche de préférence dans une direction opposée aux (pattes des) moyens de fixation.

La fente peut avoir une largeur inférieure au diamètre du tuyau. Cette fente peut être délimitée par deux bords longitudinaux en regard de l'organe, qui peuvent être écartés l'un de l'autre par déformation élastique de l'organe.

Les plans des pattes élastiquement déformables précitées sont de préférence sensiblement parallèles à l'axe longitudinal de l'organe.

Ces pattes sont de préférence élastiquement déformables dans des directions contenues dans un plan sensiblement perpendiculaire à l'axe longitudinal de l'organe.

Selon l'invention, l'agrafe comprend en outre des moyens d'anti-rotation de l'agrafe, qui sont configurés pour coopérer par butée avec le bras.

Selon l'invention, les moyens d'anti-rotation comprennent au moins un doigt comportant une surface d'appui. De préférence, ils comprennent deux doigts comportant respectivement deux surfaces d'appui en regard l'une de l'autre.

Ces doigts peuvent s'étendre respectivement dans deux plans espacés l'un de l'autre et parallèles entre eux et à l'axe longitudinal de l'organe.

L'agrafe selon l'invention est de préférence formée d'une seule pièce.

La présente invention concerne encore un bras d'entraînement d'un balai d'essuie-glace de véhicule, en particulier automobile, caractérisé en ce qu'il comprend au moins une agrafe telle que décrite ci-dessus, les moyens de fixation du ou de chaque agrafe étant engagés et traversant un orifice du bras.

De préférence, le bras comprend un carter dont au moins une partie a en section une forme en U définissant une cavité interne. Le carter est fixé à une tige rigide qui s'étend en partie à l'intérieur de la cavité et qui comprend un ou deux orifices dans lequel ou dans chacun desquels est montée une agrafe. La ou chaque agrafe peut être intégralement logée dans la cavité du carter et donc ne pas être visible pour le conducteur du véhicule.

Un ressort peut être monté dans la cavité interne du carter et comprendre une extrémité engagée dans l'un des orifices de montage des agrafes. On comprend donc qu'un même orifice sert au montage du ressort et d'une agrafe, ce qui est particulièrement avantageux en termes d'encombrement.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés, dans lesquels :
- la figure 1 est une vue en perspective d'un bras d'entraînement d'un balai d'essuie-glace de véhicule automobile, ce bras comportant des agrafes selon l'invention de fixation d'un tuyau de circulation de fluide ;
- la figure 2 est une vue en perspective et à plus grande échelle d'une première agrafe du bras de la figure 1 ;
- la figure 3 est une vue en perspective et à plus grande échelle d'une seconde agrafe du bras de la figure 1 ; et
- la figure 4 est une autre vue en perspective et à encore plus grande échelle de la seconde agrafe du bras de la figure 1.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation d'un bras d'entraînement d'un balai d'essuie-glace. La direction longitudinale correspond à l'axe principal du bras dans lequel il s'étend, alors que les orientations latérales correspondent à des droites concourantes, c'est-à-dire qui croisent la direction longitudinale, notamment perpendiculaires à l'axe longitudinal du bras. Pour les directions longitudinales, les dénominations extérieure ou intérieure s'apprécient par rapport au point de fixation du bras sur le véhicule, la dénomination intérieure correspondant à l'extrémité du bras fixée au véhicule. Enfin, les directions référencées comme supérieures ou inférieures correspondent à des orientations perpendiculaires au plan de rotation du bras, la dénomination inférieure contenant le plan du pare-brise.

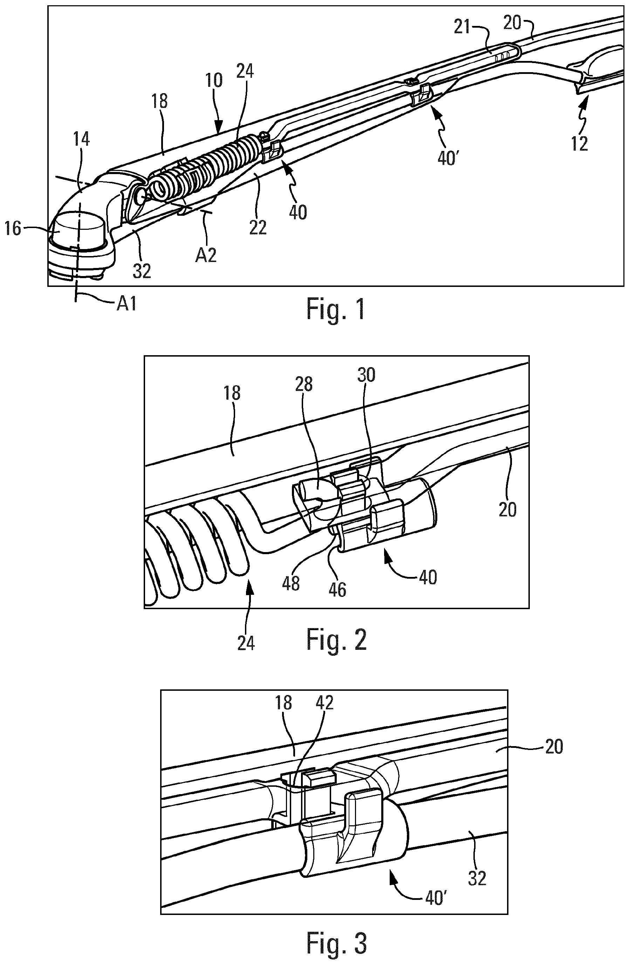

Il est illustré à la figure 1 un bras 10 d'entraînement d'un balai d'essuie-glace 12 (partiellement représenté) de véhicule automobile, ce bras ayant une forme générale allongée et étant reliée par son extrémité longitudinale extérieure au balai d'essuie-glace 12 et par son extrémité longitudinale intérieure à une tête d'entraînement 14.

La tête d'entraînement 14 est fixée à l'extrémité supérieure d'un arbre 16 d'entraînement en balayage rotatif alterné du bras 10 autour de l'axe de pivotement A1.

Le bras 10 comprend un carter 18 formant une partie d'extrémité intérieure du bras et une tige métallique 20 rigide formant une partie d'extrémité extérieure du bras.

L'extrémité intérieure du carter 18 et la tête d'entraînement 14 sont montés articulés autour d'un axe de pivotement transversal A2 permettant de soulever le bras 10 du pare-brise.

L'extrémité extérieure du carter 18 est fixée solidement par un rétrécissement 21 sur la tige métallique 20.

Le carter 18 du bras 10 a, sensiblement sur toute sa longueur, une section en forme de U renversée (c'est-à-dire ouvert du côté du pare-brise) qui définit une cavité longitudinale interne 22.

Une partie d'extrémité intérieure de la tige métallique 20 s'étend à l'intérieur de la cavité 22 du carter 18 et est fixée par son extrémité intérieure à une extrémité d'un ressort 24 de pression d'essuyage du balai d'essuie-glace 12, l'extrémité opposée du ressort étant reliée à la tête d'entraînement 14. Le ressort 24 est visible par transparence en figure 1 et mieux visible en figure 2. L'axe longitudinal du ressort 24 est sensiblement parallèle à l'axe longitudinal du bras 10.

De façon connue en soi, ce ressort 24 est un ressort hélicoïdal en traction présentant plusieurs spires enroulées entre une extrémité intérieure et une extrémité extérieure 28, chacune de ces extrémités présentant un crochet de fixation.

Le crochet de l'extrémité intérieure du ressort 24 est fixé à la tête d'entraînement 14 et le crochet de son extrémité extérieure 28 est engagé et retenu dans un orifice 30 traversant de l'extrémité intérieure de la tige métallique 20. L'orifice 30 a ici une forme générale oblongue, son axe étant sensiblement perpendiculaire à l'axe longitudinal du bras 10.

Le balai d'essuie-glace 12 comporte des moyens (non représentés) de projection de liquide lave-glace, qui sont alimentés en liquide lave-glace par un tuyau souple 32. De manière connue, le tuyau 32 est relié à un réservoir de liquide lave-glace (non représenté) agencé à l'intérieur du véhicule.

Comme on le voit sur la figure 1, le tuyau 32 court le long du bras 10, sur sensiblement toute la longueur de son carter 18, son extrémité extérieure étant reliée au balai 12 en vue de l'alimentation en liquide lave-glace de ses moyens de projection.

Le tuyau 32 est fixé au bras 10 pour éviter les inconvénients décrits dans ce qui précède. Selon l'invention, le bras 10 est équipé d'agrafe(s) qui comprennent des moyens de retenue du tuyau 32 et des moyens de fixation au bras, ces moyens de fixation comprenant des moyens d'encliquetage élastique qui sont configurés pour traverser un orifice du bras.

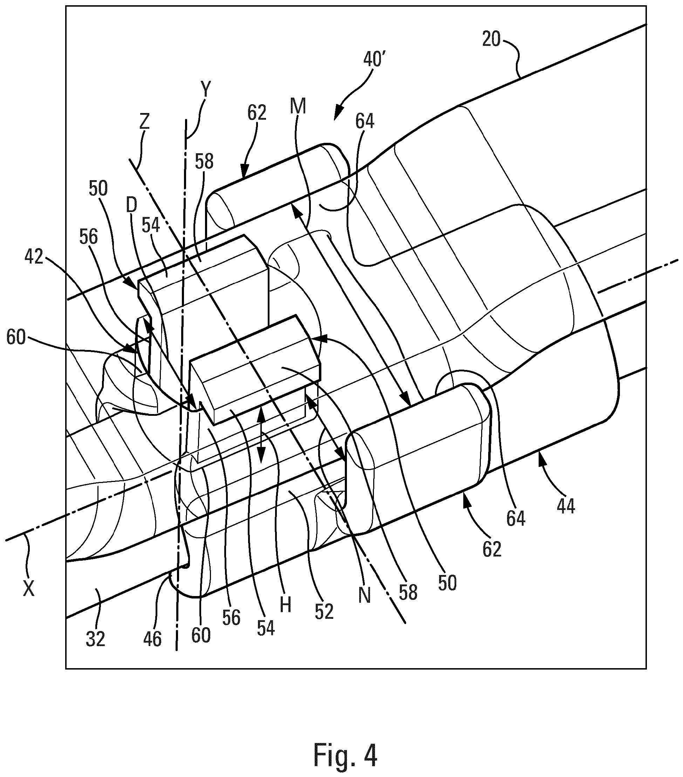

Dans le mode de réalisation de l'invention représenté aux figures 1 à 4, le bras 10 est équipé de deux agrafes 40, 40' qui sont chacune engagées dans un orifice de la tige métallique 20 du bras 10. Les agrafes ne sont pas visibles par le conducteur du véhicule car elles sont logées dans la cavité 22 du carter. L'un de ces orifices étant l'orifice 30 dans lequel est engagé le crochet de l'extrémité extérieure 28 du ressort 24 (figure 2). L'autre orifice est un orifice 42 de la tige 20 situé sensiblement à mi-distance entre l'extrémité intérieure de la tige 20 et l'extrémité extérieure rétrécie du carter du bras 10 (figures 3 et 4).

Les agrafes 40, 40' sont ici sensiblement identiques. La description qui suit, fait en référence à la figure 4 et relative à l'agrafe 40', s'applique donc également à l'agrafe 40.

Comme cela est mieux visible en figure 4, les moyens de retenue de l'agrafe 40' selon l'invention comprennent un organe longitudinal 44 qui définit un espace longitudinal interne d'engagement et de retenue du tuyau 32. On note X, l'axe longitudinal de cet organe 44, qui est sensiblement confondu avec l'axe du tuyau 32, lorsque ce dernier est monté dans l'espace de l'organe, et qui est sensiblement parallèle à l'axe longitudinal du bras 10. L'espace interne de l'organe 44 a une forme générale cylindrique et débouche axialement aux deux extrémités longitudinales de l'organe.

Dans l'exemple représenté, l'organe 44 a une forme générale cylindrique et tubulaire et comprend une surface cylindrique interne destinée à venir au contact du tuyau 32. Le diamètre interne de l'organe 44, c'est-à-dire le diamètre de son espace interne, peut être égal ou inférieur au diamètre externe du tuyau 32.

L'organe 44 est fendu et ouvert sur toute sa longueur, c'est-à-dire qu'il comporte une fente longitudinale 46 traversante (figures 2 et 4), qui est délimitée par deux bords longitudinaux 48 sensiblement parallèles et en regard l'un de l'autre. La fente 46 peut avoir une largeur inférieure au diamètre externe du tuyau 32. La fente 46 débouche ici vers le bas, du côté opposé aux moyens de fixation de l'agrafe au bras.

L'organe 44 est élastiquement déformable de façon à autoriser un écartement des bords 48 l'un de l'autre, se traduisant par une augmentation de la largeur de la fente 46. Ceci permet d'engager et de monter le tuyau dans l'espace interne de l'organe 44. Pour cela, le tuyau 32 est positionné le long de la fente 46 et à l'entrée de celle-ci. Une légère force exercée sur le tuyau 32 vers le haut et dans une direction le long d'un axe Y (qui est sensiblement perpendiculaire à l'axe X et contenu dans un plan longitudinal passant par le milieu de la fente 46 et par l'axe longitudinal X de l'organe) provoque l'appui du tuyau sur les bords longitudinaux 48 de la fente, et se traduit par un écartement de ceux-ci, jusqu'à ce que la largeur de la fente soit suffisante pour laisser passer le tuyau dans l'espace interne de l'organe 44.

L'organe 44 formant les moyens de retenue du tuyau 32, d'une part, et les moyens d'encliquetage élastique permettant la fixation au bras, d'autre part, sont situés sur deux côtés opposés (ici les côtés inférieur et supérieur, respectivement) de l'agrafe 40'.

Dans l'exemple représenté, les moyens d'encliquetage élastique de l'agrafe 40' selon l'invention comprennent deux pattes 50 élastiquement déformables, qui sont en saillie sur une plate-forme supérieure 52 de l'organe 44. Les pattes 50 s'étendent vers le haut depuis cette plate-forme 52 et comprennent à leurs extrémités libres supérieures des dents d'accrochage 54 qui sont orientées dans deux directions opposées le long d'un axe Z, qui sont ici des directions latérales. L'axe Z est ici sensiblement perpendiculaire au plan longitudinal précité passant par le milieu de la fente 46 et par l'axe longitudinal X de l'organe 44.

Les pattes 50 comprennent chacune une paroi plane, les parois des pattes s'étendant respectivement dans des plans parallèles au plan longitudinal précité et espacés l'un de l'autre. Chaque paroi comprend à son extrémité supérieure libre un rebord sensiblement perpendiculaire orienté du côté opposé à l'autre paroi et formant la dent d'accrochage 54 de la patte.

Chaque patte 50 est élastiquement déformable notamment par flexion dans un plan sensiblement perpendiculaire à l'axe longitudinal X de l'organe. Les pattes 50 peuvent ainsi être élastiquement déformées pour rapprocher leurs extrémités libres l'une de l'autre, ou pour les écarter l'une de l'autre.

En position sensiblement de repos représentée en figure 4, les surfaces latérales 56 orientées dans des directions opposées des parois des pattes 50 sont à une distance D l'une de l'autre qui est déterminée en fonction des dimensions de l'orifice 42 d'engagement de ces pattes.

Dans le cas où l'orifice 42 a une dimension transversale supérieure à la distance D, les pattes 50 sont montées avec jeu dans l'orifice. Dans le cas contraire, les pattes sont montées légèrement précontraintes dans l'orifice, ce qui permet de limiter les déplacements de l'agrafe 40' en utilisation. De plus, la largeur ou dimension longitudinale des pattes 50 est de préférence déterminée pour que celles-ci puissent coopérer par butée avec les bords périphériques de l'orifice 42 et ainsi limiter les déplacements de l'agrafe vis-à-vis de la tige 50, en particulier le long de l'axe X.

Par ailleurs, la hauteur de chaque patte 50, et plus précisément la hauteur H entre la plate-forme 52 et la dent 54 (ou le rebord de la paroi) de cette patte, est déterminée en fonction de la longueur de l'orifice 42 ou de l'épaisseur de matière traversée par l'orifice, qui est l'épaisseur de la tige 20 le long de l'axe Y ou de l'axe de l'orifice.

La hauteur H doit ici être au moins égale à l'épaisseur de la tige 20 de façon à ce que les pattes 50 puissent coopérer par encliquetage élastique avec l'orifice 42 et autoriser leurs dents 54 à venir en appui sur la surface supérieure de la tige 20, après le retour élastique des pattes.

Dans le cas où la hauteur H est sensiblement égale à l'épaisseur de la tige 20, la plate-forme 52 de l'organe 44 doit être en appui sur la surface inférieure de la tige 20 pour autoriser le retour élastique précité.

De plus, la dent 54 de chaque patte 50 comprend à son extrémité libre un chanfrein 58 formant une rampe destinée à faciliter l'introduction de la patte 50 dans l'orifice 42 ainsi que la déformation de celle-ci lors de cette introduction.

Les pattes 50 coopèrent avec l'orifice 42 de la tige 20 par encliquetage élastique. Le montage de l'agrafe 40' sur la tige 20 peut être réalisé de la façon suivante. L'agrafe 40' est positionnée sous la tige 20 de façon à ce que l'axe longitudinal X de l'organe 44 soit sensiblement parallèle à l'axe longitudinal du bras 10 et que les pattes 50 soient situées en dessous et en regard de l'orifice 42. L'agrafe 40' est ensuite déplacée vers la tige 20 de façon à ce que les pattes 50 prennent appui par leurs chanfreins 58 sur les bords longitudinaux inférieurs 60 en regard de l'orifice 42. Une force exercée sur l'agrafe 40' dans la direction Y va provoquer le fléchissement et le rapprochement des pattes 50, qui vont s'engager dans l'orifice 42. Le déplacement de l'agrafe 40' dans la direction Y est poursuivi jusqu'à ce que la plate-forme 52 prenne appui sur la surface inférieure de la tige 20 et que les dents 54 des pattes 50 viennent sur la surface supérieure de la tige, par retour élastique des pattes, qui reviennent sensiblement dans leur position d'origine à l'état sans contrainte.

L'agrafe 40' selon l'invention représentée dans les dessins comprend en outre des moyens d'anti-rotation qui sont destinés à coopérer par butée avec le bras 10, et en particulier avec la tige 20 du bras, pour éviter voire empêcher tout déplacement en rotation de l'agrafe autour de l'axe de l'orifice 42.

Dans l'exemple représenté, les moyens d'anti-rotation comprennent deux doigts 62 sensiblement parallèles qui sont en saillie respectivement sur des côtés (latéraux) de l'organe 44. Les doigts 62 comportent des surfaces latérales 64 en regard qui servent de surfaces d'appui sur la tige métallique 20.

Les doigts 62 sont chacun formés par une paroi plane qui s'étend dans un plan sensiblement parallèle au plan longitudinal précité. Ainsi, les doigts 62 et les pattes 50 s'étendent sensiblement parallèlement. Les plans des doigts 62 sont espacés l'un de l'autre d'une distance M légèrement supérieure à la largeur de la tige 20. Ces plans sont également espacés des plans précités des pattes 50. Le plan de chaque doigt 62 est séparé du plan de la patte 50 la plus proche par une distance N qui est supérieure à l'épaisseur de matière entre la paroi latérale interne de l'orifice 42 et la paroi latérale externe la plus proche de la tige 20.

Comme on le voit dans les dessins, après le montage de l'agrafe 40' dans l'orifice 42 de la tige 20, les doigts 62 s'étendent de part et d'autre de la tige et leurs surfaces latérales internes 62 sont destinées à coopérer par butée avec la tige 20 pour limiter les déplacements en rotation de l'agrafe autour de l'axe de l'orifice 42.

Comme cela est également visible dans les dessins, l'agrafe 40' comportant l'organe 44, les pattes 50 et les doigts 62, est formée d'une seule pièce, par exemple en matériau plastique.

Dans l'exemple décrit dans ce qui précède, le bras est équipé de deux agrafes de fixation du tuyau de circulation de liquide lave glace. Il est bien entendu envisageable qu'un bras soit équipé d'une seule agrafe ou de plus de deux agrafes, notamment en fonction de la longueur du bras (un bras relativement long peut avoir besoin de plus d'agrafes répartis sur sa longueur qu'un bras plus court, pour assurer une bonne fixation du tuyau vis-à-vis du bras).

## Revendications

1. Bras (10) d'entraînement d'un balai d'essuie-glace (12) de véhicule, en particulier automobile comprenant au moins une agrafe (40, 40') de fixation d'un tuyau (32) de circulation de fluide au bras (10) d'entraînement, ladite agrafe comprenant des moyens de retenue du tuyau et des moyens de fixation au bras, lesdits moyens de fixation sont situés sur un côté de l'agrafe opposé à celui où sont situés lesdits moyens de retenue, l'agrafe comprenant en outre des moyens d'anti-rotation de l'agrafe, qui sont configurés pour coopérer par butée avec le bras (10) d'entraînement, le bras (10) d'entraînement est **caractérisé en ce que** les moyens de fixation de l'au moins une agrafe comprennent des moyens d'encliquetage élastique qui sont engagés et traversent un orifice (30, 42) du bras et **en ce que** les moyens d'anti-rotation comprennent au moins un doigt (62) comportant une surface d'appui (64).

2. Bras (10) d'entraînement selon la revendication 1, **caractérisée en ce que** les moyens de fixation comprennent au moins une patte (50) élastiquement déformable et comportant à une extrémité au moins une dent d'accrochage (54).

3. Bras (10) d'entraînement selon la revendication 2, **caractérisée en ce que** les moyens de fixation comprennent au moins deux pattes (50) élastiquement déformables et comportant respectivement au moins deux dents d'accrochage (54) qui sont orientées dans des directions sensiblement opposées.

4. Bras (10) d'entraînement selon la revendication 3, **caractérisée en ce que** lesdites au moins deux pattes (50) s'étendent respectivement dans deux plans parallèles entre eux et espacés l'un de l'autre.

5. Bras (10) d'entraînement selon l'une quelconque des revendications précédentes, **caractérisée en ce que** les moyens de retenue comprennent un organe longitudinal (44) tubulaire définissant un espace longitudinal interne de logement et de retenue du tuyau (32), cet organe comportant une fente longitudinale (46) traversante configurée pour autoriser le passage du tuyau lors de son montage dans ledit espace.

6. Bras (10) d'entraînement selon la revendication 5, en dépendance de la revendication 4, **caractérisée en ce que** les plans des pattes (50) sont sensiblement parallèles à l'axe longitudinal (X) de l'organe (44).

7. Bras (10) d'entraînement selon la revendication 6, **caractérisée en ce que** les pattes (50) sont élastiquement déformables dans des directions contenues dans un plan sensiblement perpendiculaire à l'axe longitudinal (X) de l'organe (44).

8. Bras (10) d'entraînement selon l'une des revendications 5 à 7, **caractérisée en ce que** la fente (46) a une largeur inférieure au diamètre du tuyau (32), et est délimitée par deux bords longitudinaux (48) en regard de l'organe (44), qui peuvent être écartés l'un de l'autre par déformation élastique de l'organe.

9. Bras (10) d'entraînement selon l'une quelconque des revendications précédentes, **caractérisée en ce que** les moyens d'anti-rotation comprennent deux doigts (62) comportant respectivement deux surfaces d'appui en regard l'une de l'autre.

10. Bras (10) d'entraînement selon la revendication 9, en dépendance de l'une des revendications 5 à 8, **caractérisée en ce que** les doigts (62) s'étendent respectivement dans deux plans espacés l'un de l'autre et parallèles entre eux et à l'axe longitudinal (X) de l'organe (44).

11. Bras (10) d'entraînement selon l'une quelconque des revendications précédentes, **caractérisée en ce que** l'agrafe est formée d'une seule pièce.

12. Bras (10) d'entraînement selon l'une quelconque des revendications précédentes, **caractérisé en ce qu'**il comprend un carter (18) dont au moins une partie a en section une forme en U définissant une cavité interne (22), le carter étant fixé à une tige (20) rigide qui s'étend en partie à l'intérieur de la cavité et qui comprend un ou deux orifices (30, 42) dans lequel ou dans chacun desquels est montée une agrafe (40, 40').

13. Bras (10) d'entraînement selon la revendication 12, **caractérisé en ce qu'**un ressort (24) est monté dans la cavité interne (22) du carter (18) et comprend une extrémité engagée dans l'un (30) des orifices de montage des agrafes (40, 40').

## Patentansprüche

1. Antriebsarm (10) eines Scheibenwischerblatts (12) eines Fahrzeugs, insbesondere eines Kraftfahrzeugs, der mindestens eine Klammer (40, 40') zur Befestigung eines Flüssigkeitskreislaufschlauchs (32) an dem Antriebsarm (10) beinhaltet, wobei die Klammer Mittel zum Halten des Schlauchs und Mittel zur Befestigung an dem Arm beinhaltet, wobei sich die Befestigungsmittel auf einer Seite der Klammer befinden, die der Seite, auf der sich die Haltemittel befinden, gegenüberliegt, wobei die Klammer ferner Mittel zum Verhindern des Drehens der Klammer beinhaltet, die dazu konfiguriert sind, mittels Anschlag mit dem Antriebsarm (10) zusammenzuwirken, wobei der Antriebsarm (10) **dadurch gekennzeichnet ist, dass** die Befestigungsmittel der mindestens einen Klammer elastische Einrastmittel beinhalten, die in eine Öffnung (30, 42) des Arms eingreifen und durch diese hindurchgehen, und dass die Mittel zum Verhindern des Drehens mindestens einen Finger (62) beinhalten, der eine Anlagefläche (64) umfasst.

2. Antriebsarm (10) nach Anspruch 1, **dadurch gekennzeichnet, dass** die Befestigungsmittel mindestens eine Lasche (50) beinhalten, die elastisch verformbar ist und an einem Ende mindestens eine Rastnase (54) umfasst.

3. Antriebsarm (10) nach Anspruch 2, **dadurch gekennzeichnet, dass** die Befestigungsmittel mindestens zwei Laschen (50) beinhalten, die elastisch verformbar sind und jeweils mindestens zwei Rastnasen (54) umfassen, die in im Wesentlichen entgegengesetzte Richtungen zeigen.

4. Antriebsarm (10) nach Anspruch 3, **dadurch gekennzeichnet, dass** sich die mindestens zwei Laschen (50) jeweils in zwei zueinander parallelen Ebenen erstrecken, die voneinander beabstandet sind.

5. Antriebsarm (10) nach einem der vorhergehenden Ansprüche, **dadurch gekennzeichnet, dass** die Haltemittel ein röhrenförmiges längliches Organ (44) beinhalten, das einen länglichen Innenraum zum Aufnehmen und Halten des Schlauchs (32) definiert, wobei dieses Organ einen länglichen Durchgangsschlitz (46) umfasst, der dazu konfiguriert ist, den Schlauch bei dessen Montage in den Raum passieren zu lassen.

6. Antriebsarm (10) nach Anspruch 5 in Abhängigkeit von Anspruch 4, **dadurch gekennzeichnet, dass** die Ebenen der Laschen (50) zu der Längsachse (X) des Organs (44) im Wesentlichen parallel sind.

7. Antriebsarm (10) nach Anspruch 6, **dadurch gekennzeichnet, dass** die Laschen (50) in Richtungen elastisch verformbar sind, die in einer Ebene enthalten sind, die zu der Längsachse (X) des Organs (44) im Wesentlichen senkrecht ist.

8. Antriebsarm (10) nach einem der Ansprüche 5 bis 7, **dadurch gekennzeichnet, dass** der Schlitz (46) eine Breite aufweist, die kleiner als der Durchmesser des Schlauchs (32) ist, und durch zwei gegenüberliegende Längskanten (48) des Organs (44) begrenzt wird, die durch elastische Verformung des Organs voneinander entfernt werden können.

9. Antriebsarm (10) nach einem der vorhergehenden Ansprüche, **dadurch gekennzeichnet, dass** die Mittel zum Verhindern des Drehens zwei Finger (62) beinhalten, die jeweils zwei sich gegenüberliegende Anlageflächen umfassen.

10. Antriebsarm (10) nach Anspruch 9 in Abhängigkeit von einem der Ansprüche 5 bis 8, **dadurch gekennzeichnet, dass** sich die Finger (62) jeweils in zwei Ebenen erstrecken, die voneinander beabstandet sind und zueinander und zu der Längsachse (X) des Organs (44) parallel sind.

11. Antriebsarm (10) nach einem der vorhergehenden Ansprüche, **dadurch gekennzeichnet, dass** die Klammer einstückig ausgebildet ist.

12. Antriebsarm (10) nach einem der vorhergehenden Ansprüche, **dadurch gekennzeichnet, dass** er ein Gehäuse (18) beinhaltet, von dem mindestens ein Teil vom Querschnitt her U-förmig ist und einen Innenraum (22) definiert, wobei das Gehäuse an einer starren Stange (20) befestigt ist, die sich teilweise im Inneren des Raums erstreckt und die ein oder zwei Öffnungen (30, 42) beinhaltet, in der oder in jeder von denen eine Klammer (40, 40') montiert ist.

13. Antriebsarm (10) nach Anspruch 12, **dadurch gekennzeichnet, dass** in dem Innenraum (22) des Gehäuses (18) eine Feder (24) montiert ist und ein Ende beinhaltet, das in eine (30) der Öffnungen zur Montage der Klammern (40, 40') eingreift.

## Claims

1. Drive arm (10) of a windscreen wiper (12) of a vehicle, particularly a vehicular automobile, comprising at least one clip (40, 40') for fastening a fluid circulation tube (32) to a drive arm (10), said clip comprising means for retaining and fastening the tube to the arm, said fastening means are located on a side of the clip opposite that where said retaining means are located, said clip further comprising anti-rotation means of the clip that are configured to cooperate by abutment with the drive arm (10), the drive arm (10) is **characterized in that** the fastening means of the clip comprise elastic clipping means that are engaged and pass through an opening (30, 42) of the arm and **in that** the anti-rotation means comprise at least one finger (62) comprising a bearing surface (64).

2. Drive arm (10) according to Claim 1, **characterized in that** the fastening means comprise at least one elastically deformable tab (50) comprising at least one hooking tooth (54) at one end.

3. Drive arm (10) according to Claim 2, **characterized in that** the fastening means comprise at least two elastically deformable tabs (50) comprising at least two hooking teeth (54), respectively, which are oriented in substantially opposite directions.

4. Drive arm (10) according to Claim 3, **characterized in that** said at least two tabs (50) extend respectively in two planes spaced apart and parallel to one another.

5. Drive arm (10) according to any one of the preceding claims, **characterized in that** the retaining means comprise a tubular longitudinal member (44) defining an inner longitudinal space for housing and retaining the tube (32), this member comprising a longitudinal through slot (46) configured to allow the tube to pass through it during its mounting in said space.

6. Drive arm (10) according to Claim 5, dependent on Claim 4, **characterized in that** the planes of the tabs (50) are substantially parallel to the longitudinal axis (X) of the member (44).

7. Drive arm (10) according to Claim 6, **characterized in that** the tabs (50) are elastically deformable in the directions contained in a plane substantially perpendicular to the longitudinal axis (X) of the member (44).

8. Drive arm (10) according to one of Claims 5 to 7, **characterized in that** the width of the slot (46) is less than the diameter of the tube (32), and is delimited by two longitudinal edges (48) opposite the member (44), which can be spread apart by elastic deformation of the member.

9. Drive arm (10) according to any one of the preceding claims, **characterized in that** the anti-rotation means comprise two fingers (62) comprising two bearing surfaces opposite one another, respectively.

10. Drive arm (10) according to Claims 9, as dependent on any of Claims 5 to 8, **characterized in that** the fingers (62) extend respectively in two planes spaced apart and parallel to one another and along the longitudinal axis (X) of the member (44).

11. Drive arm (10) according to any one of the preceding claims, **characterized in that** it is integrally formed.

12. Drive arm (10) according to any one of the preceding claims, **characterized in that** it comprises a housing (18), at least part of which has a U-shaped section defining an inner cavity (22), the housing being fixed to a rigid rod (20) which extends partially inside the cavity and which comprises one or two openings (30, 42) in which or in each of which a clip is mounted (40, 40').

13. Drive arm (10) according to claim 12, a spring (24) is mounted in the inner cavity (22) of the housing (18) and comprises an end engaged in one (30) of the mounting openings of the clips (40, 40').
